# EUROPÄISCHE PATENTSCHRIFT

(11) **EP 1 606 674 B1**
(45) Veröffentlichungstag und Bekanntmachung des Hinweises auf die Patenterteilung: **09.05.2007**
(21) Anmeldenummer: 04716238.3
(22) Anmeldetag: 02.03.2004
(51) Int. Cl.: G05B 19/401

(54) **KOORDINATENMESSGERÄT**
CO-ORDINATE MEASURING DEVICE
APPAREIL DE MESURE DE COORDONNEES

(30) Priorität: 25.03.2003 DE 10314306
(43) Veröffentlichungstag der Anmeldung: 21.12.2005
(73) Patentinhaber: Carl Zeiss Industrielle Messtechnik GmbH, 73447 Oberkochen (DE)
(72) Erfinder: WALTHER, Jörg, 89547 Gerstetten (DE); HAUG, Helmut, 73760 Ostfildern (DE); BÜLOW, Rolf, 73760 Ostfildern (DE); HERDTLE, Gerhardt, 73257 Köngen (DE)
(74) Vertreter: Duhme, Torsten
(86) Internationale Anmeldenummer: PCT/EP2004/002074
(87) Internationale Veröffentlichungsnummer: WO 2004/086159

(56) Entgegenhaltungen:
- EP-A- 0 252 212
- DE-A1- 4 423 307
- DE-U1- 29 607 383
- US-A1- 2002 117 987

## Beschreibung

Die Erfindung bezieht sich auf ein Koordinatenmessgerät mit entlang von vorgegebenen Achsen bewegbaren Schlitten und mit einem Betriebsarten-Umschalter, wobei die Schlitten in einer ersten Betriebsart über eine CNC-Steuereinheit mit einem Prozessor mittels motorischer Antriebe und in einer zweiten Betriebsart manuell verfahrbar sind, wobei ein manuell betätigbares Steuerelement zum Erzeugen von Steuersignalen vorgesehen ist, und wobei das Steuerelement in der zweiten Betriebsart an einen Eingang der CNC-Steuereinheit angeschlossen ist und die Antriebe von dem Steuerelement über die CNC-Steuereinheit gesteuert werden.

Ein solches Koordinatenmessgerät ist aus DE 296 07 383 U1 bekannt.

Bei Koordinatenmessgeräten, insbesondere solchen in Horizontalarm-Bauweise, besteht häufig die Forderung, dass diese Geräte einerseits im CNC-Betrieb, andererseits aber auch im manuellen Betrieb eingesetzt werden können. Dies gilt insbesondere für relativ große Koordinatenmessgeräte, wie sie beim Design von Kraftfahrzeugkarosserien eingesetzt werden. Derartige Koordinatenmessgeräte haben Abmessungen von bis zu mehreren Metern je Achse und ein Gewicht, das deutlich oberhalb von 0,5 Tonnen liegen kann.

Um bei derartigen Koordinatenmessgeräten von der CNC-Betriebsart auf die manuelle Betriebsart überzugehen, werden die vorhandenen Antriebe der Achsen mechanisch oder elektrisch ausgekuppelt, so dass dann der Bediener an der letzten oder der vorletzten bewegten Achse angreifen und auf diese Weise den Tastkopf manuell im Raum verfahren kann. Aus praktischen Gründen wird dabei meist am Ende des Querarms bzw. an der Pinole angegriffen. Die manuelle Betriebsart wird meist beim Anreißen von Werkstücken, aber auch bei sehr einfachen Messungen mit schaltenden Tastern eingesetzt.

Darüber hinaus sind auch Koordinatenmeasgeräte bekannt, bei denen für eine manuelle Betriebsart die Antriebe der Achsen in der bereits erwähnten Weise ausgekuppelt werden, dann aber die Achsen nicht unmittelbar von Hand verstellt werden. Bei diesen Koordinatenmessgeräten sind an den einzelnen Achsen Handräder angebracht, die teilweise unter Nutzung der vorhandenen Antriebswellen auf die Antriebe der Achsen wirken. Auf diese Weise kann man das Koordinatenmessgerät bei kleinen Verfahrwegen schnell und genau positionieren.

Es sind auch Koordinatenmessgeräte bekannt, bei denen die Achsen durch motorische Antriebe verstellbar sind und diese Achsen mittels manuell betätigbarer Steuerelemente verfahren werden.

In der JP 08-193829 A ist ein Koordinatenmessgerät in Portalbauweise beschrieben, bei dem am unteren Ende der Pinole ein Joystick angebracht ist, mit dem für drei kartesische Koordinaten über entsprechende Sensoren Steuerbefehle erzeugt werden können, die ein Verfahren des Tastkopfes bewirken.

Aus der DE 44 23 307 A1 ist eine Steuerung für Koordinatenmessgeräte bekannt, bei der ein Bedienpult mit einem Handrad eingesetzt wird, das auf die Antriebe des jeweils ausgewählten Messschlittens wirkt. Das Bedienpult ist eine separat handhabbare Einheit, die über ein Kabel mit der Konsole des Koordinatenmessgerätes verbunden ist.

Eine vergleichbare Anordnung, bei der statt eines Handrades ein Joystick in einem separat handhabbaren Bedienpult für ein Koordinatenmessgerät verwendet wird, ist in der EP 0 252 212 B1 beschrieben.

In der DE 199 37 307 A1 ist eine joystickartige Anordnung zum Erzeugen von dreidimensionalen Steuerbefehlen bekannt. Diese Anordnung ist unter der Bezeichnung "Ergocommander" auch kommerziell erhältlich (wwp.logicad3d.com). Derartige Anordnungen zum Erzeugen von dreidimensionalen Steuerbefehlen werden auch als "Space Mouse" und dgl. bezeichnet. Derartige Steueranordnungen werden auch in der Robotertechnik eingesetzt, um Mehrachsroboter per Hand durch Bedienen eines an der letzten Achse befestigten Manipulators zu führen.

Die bekannten Koordinatenmessgeräte der oben beschriebenen Art haben den Nachteil, dass sie für Einsatzfälle wie die genannte Anwendung der Vermessung von Kraftfahrzeugkarosserien nicht uneingeschränkt verwendbar sind. Herkömmliche Koordinatenmessgeräte, bei denen die Antriebe der Achsen mechanisch oder elektrisch ausgekuppelt und dann von Hand bewegt werden, haben den Nachteil, dass die auf diese Weise dargestellte manuelle Betriebsart nur für einfache Messaufgaben einsetzbar ist, da eine rein manuelle Führung der letzten oder vorletzten Achse des Koordinatenmessgerätes naturgemäß mit Unsicherheiten behaftet ist. Dies gilt beispielsweise dann, wenn der Tastkopf entlang einer geraden Linie geführt werden soll. Dann kann bei rein manueller Führung nicht ausgeschlossen werden, dass der Taststift quer zur zu vermessenden Linie eine Zitterbewegung ausführt, die das Messergebnis in nicht mehr tolerierbarer Weise verschlechtert.

Bei den anderen Koordinatenmessgeräten bekannter Bauart, bei denen die manuelle Führung durch Handräder oder dgl. unter Nutzung vorhandener Antriebswellen bewirkt wird, ergibt sich der Nachteil eines erheblichen mechanischen Zusatzaufwandes, wobei ferner sichergestellt werden muss, dass nach dem Wiedereinkoppeln der Antriebswellen an die CNC-gesteuerten Antriebe wieder die gewünschte Genauigkeit in der Positionierung gegeben ist.

Schließlich haben diejenigen bekannten Koordinatenmessgeräte, bei denen eine motorische Steuerung der Achsen über Joysticks, Handräder oder dgl. möglich ist, den Nachteil, dass automatisierte Messungen nicht durchgeführt werden können, weil diese Koordinatenmessgeräte für andere Betriebsweisen, insbesondere für eine CNC-Steuerung, weder geeignet noch vorgesehen sind.

Aus der eingangs genannten DE 296 07 383 U1 ist ein Koordinatenmessgerät bekannt, bei dem man einen CNC-Ablauf für eine automatische Vermessung eines Werkstücks in einem manuellen Betriebsmodus programmieren kann. Im manuellen Betriebsmodus folgen die Antriebe des Koordinatenmessgerätes einer handgeführten Bewegung des Tastkopfes im Sinne einer Nachlaufsteuerung. Aufgrund der unterschiedlichen Ansteuerung der Antriebe kann eine theoretisch mögliche manuelle Messung nicht ohne weiteres mit einer automatisch gesteuerten CNC-Messung gleichgesetzt werden.

Vor diesem Hintergrund ist es eine Aufgabe der vorliegenden Erfindung, ein Koordinatenmessgerät der eingangs genannten Art anzugeben, das eine Messung mit möglichst gleichbleibend hoher Positioniergenauigkeit unabhängig von der Betriebsart ermöglicht.

Diese Aufgabe wird durch ein Koordinatenmessgerät der eingangs genannten Art gelöst, mit einer Sicherheitsschaltung, die die zweite Betriebsart erst dann freigibt, wenn vorbestimmte Kriterien in Gestalt von Schaltzuständen erfüllt sind, und bei dem die erzeugten Steuersignale dem Prozessor anstelle von programmierten Steuersignalen zugeführt werden, wenn die Sicherheitsschaltung dies freigibt, wobei der Prozessor dann eine Ansteuerung der Antriebe ebenso wie in der ersten Betriebsart bewirkt, lediglich mit der Abweichung, dass die entsprechenden Führungssignale manuell und nicht programmiert erzeugt wurden.

Erfindungsgemäß wird in die CNC-gesteuerten Antriebe überhaupt nicht eingegriffen, so dass von daher keine Einbuße an Positioniergenauigkeit befürchtet werden muss. Die Erfindung löst die zugrunde liegende Aufgabe vielmehr in eleganter Weise dadurch, dass die durch das manuell betätigbare Steuerelement erzeugten Steuersignale an Stelle von programmierten Signalen einem Eingang der CNC-Steuereinheit zugeführt werden, so dass die Antriebe der Achsen in unveränderter Weise und in unveränderter Genauigkeit geführt werden, wobei lediglich statt programmierter Eingangssignale manuell erzeugte Eingangssignale verarbeitet werden.

Die Erfindung gestattet es daher, Koordinatenmessgeräte mit CNC-Steuereinheit für die motorischen Antriebe auf verhältnismäßig einfache Weise so umzurüsten, dass neben einer CNC-Betriebsart auch eine manuelle Betriebsart möglich wird. Der Zusatznutzen für ein solches CNC-fähiges Koordinatenmessgerät ist daher bei verhältnismäßig geringem Aufwand erheblich.

Besonders vorteilhaft lässt sich die Erfindung zum Vermessen von Karosserien von Kraftfahrzeugen einsetzen.

Die Sicherheitsschaltung hat den Vorteil, dass Beschädigungen am Werkstück ebenso vorgebeugt wird wie der Gefahr einer Verletzung des Bedieners oder anderer Personen, die sich im Arbeitsbereich des Koordinatenmessgerätes befinden. Wie bereits erwähnt wurde, richtet sich die vorliegende Erfindung insbesondere auf den Anwendungsfall der Vermessung von großen Objekten mit entsprechend großen und schweren Koordinatenmessgeräten . Während bei diesen Koordinatenmessgeräten entsprechende Sicherheitsroutinen in bekannten CNC-Steuerungen vorgesehen und/oder auch als Hardware ausgeführt sind, stellt eine manuelle Betriebsart immer ein gewisses zusätzliches Risiko dar, weil durch Unaufmerksamkeit des Bedieners schwere Massen in ungewollter Weise bewegt werden können, was mitunter zu Unfällen führt. Es ist daher beim Implementieren einer manuellen Betriebsart besonders wichtig, Sicherheitsaspekten besondere Aufmerksamkeit zu widmen.

Dies geschieht im Rahmen der vorliegenden Erfindung dadurch, dass eine Vielzahl von Schaltzuständen definiert werden kann, die entweder alternativ oder in anderer logischer Verknüpfung erfüllt sein müssen, um die manuelle Betriebsart überhaupt erst freizugeben.

Bei einer ersten Variante ist der Schaltzustand durch eine vorbestimmte Betätigung eines manuell betätigbaren Schalters herbeiführbar.

Gemäß einer ersten Weiterbildung dieses Ausführungsbeispiels ist der Schalter zum Herbeiführen des Schaltzustandes vor dem Umschalten der Betriebsarten in vorbestimmter Weise zu betätigen, vorzugsweise in vorbestimmter Weise mehrfach.

Diese Maßnahmen haben den Vorteil, dass der Bediener zum Übergang in die manuelle Betriebsart ganz bewusst einen bestimmten Schalter betätigen muss. Dabei kann seine Aufmerksamkeit noch weiter dadurch geschärft werden, dass er diesen Schalter in vorbestimmter Weise mehrfach betätigen muss, beispielsweise dreimal oder viermal.

Alternativ oder zusätzlich kann vorgesehen sein, dass der Schalter zum Herbeiführen des Schaltzustandes nach dem Umschalten der Betriebsarten in vorbestimmter weise zu betätigen ist.

Diese Maßnahme hat den Vorteil, dass das Bewusstsein des Bedieners hinsichtlich der walten zu lassenden Vorsicht auch und gerade während der Dauer der manuellen Betriebsart andauern muss .

Dies kann beispielsweise dadurch realisiert werden, dass der Schalter während der Dauer der zweiten Betriebsart betätigt zu halten ist.

Diese Maßnahme hat den Vorteil, dass der Bediener ständig an seine Sorgfaltspflicht erinnert wird. Alternativ kann auch vorgesehen werden, den Schalter in der manuellen Betriebsart in bestimmten Mindest-Zeitabständen zu betätigen, wie dies von anderen Sicherheitseinrichtungen bekannt ist.

Gemäß einer weiteren Alternative kann der Schaltzustand durch eine vorbestimmte Betätigung des Steuerelementes selbst herbeiführbar sein.

Diese Maßnahme hat zunächst den Vorteil, dass ein separater Schalter eingespart wird. Von der Bedienung her hat die Maßnahme den Vorteil, dass sämtliche Funktionen in dem Steuerelement vereinigt sind, also die Steuerfunktion und die Sicherheitsfunktion.

Bei einer praktischen Ausführung dieser Variante kann das Steuerelement als eine Mehrzahl von Betätigungselementen für verschiedene Achsen ausgebildet sein, wobei der Schaltzustand durch eine gleichzeitige Betätigung der Betätigungselemente herbeiführbar ist.

Dies kann bei mehreren Handrädern z.B. dadurch geschehen, dass der Bediener alle Handräder ergreift. Dann ist einerseits in der bereits erwähnten Weise das Bewusstsein des Bedieners geschärft, andererseits ist sichergestellt, dass sich beide Hände des Bedieners an den Betätigungselementen befinden und daher nicht aus Unachtsamkeit im Verfahrweg an den bewegten Achsen befindlich sein können.

Weitere Ausführungsbeispiele der Erfindung zeichnen sich dadurch aus, dass die Antriebe wahlweise blockierbar sind, insbesondere durch elektrisches Blockieren.

Diese Maßnahme hat den Vorteil, dass ein Blockieren der jeweils nicht benötigten Achse oder Achsen die bereits erwähnten Fehler vermeidet, wenn sich z.B. an der gewünschten linearen Bewegung eine quer dazu gerichtete Zitterbewegung überlagert. Erscheinungen dieser Art können zuverlässig verhindert werden, wenn z.B. bei einer linearen Bewegung entlang einer der Achsen des Koordinatenmessgerätes die beiden anderen Achsen abgeschaltet werden. Entsprechendes gilt, wenn eine Bewegung nur in einer bestimmten Ebene gewünscht ist, die durch zwei Achsen des Koordinatenmessgerätes definiert ist und dann die dritte Achse blockiert wird.

Schließlich ist erfindungsgemäß bevorzugt, wenn das Steuerelement in einer für Rechtshänder bzw. in einer für Linkshänder optimierten ersten bzw. in einer zweiten Position angeordnet ist und die von dem Steuerelement erzeugten Steuersignale je nach Position invertiert werden.

Diese Maßnahme hat den Vorteil, dass für beide Arten von Bedienern, nämlich für Rechtshänder und für Linkshänder, jeweils optimale Arbeitsverhältnisse zur verfügung gestellt werden können. Dabei kann in der beschriebenen Weise der Besonderheit Rechnung getragen werden, dass bei Linkshändern im Gegensatz zu Rechtshändern auch die Orientierung spiegelbildlich sein kann, so dass durch Invertieren der Steuersignale die jeweils gewünschten Verfahrbewegungen erzeugt werden.

Bei einer bevorzugten Ausbildung der Erfindung ist das Steuerelement an einem der Schlitten angeordnet.

Dies kann in bevorzugter weise dadurch geschehen, dass die Schlitten als X-, Y- und Z-Schlitten eines dreiachsigen, kartesischen Koordinatenmessgerätes ausgebildet sind, wobei das Steuerelement an dem Y-Schlitten, also an der vorletzten Achse, angeordnet ist. Alternativ kann das Steuerelement aber auch an dem Z-Schlitten, also an der letzten Achse, nämlich der Vertikalachse, angeordnet sein.

Diese Maßnahme hat den Vorteil, dass je nach Komplexität und zur verfügung stehendem Einbauraum eine optimale Anordnung des Steuerelementes gewählt werden kann. Im praktischen Einsatz haben diese Maßnahmen den Vorteil, dass der Bediener den Taststift in der manuellen Betriebsart so führen kann, dass er selbst sich in unmittelbarer Nähe des Taststiftes und damit des Messortes befindet, wobei die Bewegungen des Taststiftes durch unmittelbaren Zugriff in die Nähe des Messortes gesteuert werden kann.

Bei einer alternativen Gruppe von Ausführungsbeispielen ist hingegen das Steuerelement an einem separat handhabbaren Panel angeordnet.

Diese Maßnahme hat den Vorteil, dass die Führung des Taststiftes auch über größere Distanzen hinweg erfolgen kann, was insbesondere bei sehr großen Messobjekten von Vorteil sein kann, wenn der Bediener ansonsten auf die Messplatte des Messtisches steigen müsste, um die Führung durch Betätigung des Steuerelementes in unmittelbarer Nähe des Messortes vorzunehmen.

Es versteht sich, dass die beiden vorstehend genannten Alternativen auch beide an einem Koordinatenmessgerät realisiert werden können, um für unterschiedliche Messaufgaben mit unterschiedlich angeordneten Steuerelementen jeweils optimal arbeiten zu können.

Bei Ausführungsbeispielen der Erfindung ist das Steuerelement als ein mehrachsiges Betätigungselement ausgebildet. Bevorzugt ist eine Ausbildung als Joystick oder in einer anderen bekannten Art, wie sie eingangs bereits erwähnt wurden.

Alternativ kann das Steuerelement auch als eine Mehrzahl von Betätigungselementen für verschiedene Achsen ausgebildet sein, beispielsweise als ein in seiner Funktion umschaltbares Handrad oder als eine Gruppe von Handrädern.

Diese Maßnahme hat den Vorteil, dass je nach Anwendungsfall das jeweils optimale Betätigungselement gewählt werden darf. Auch hier versteht sich, dass unterschiedliche Arten von Betätigungselementen an ein und demselben Koordinatenmessgerät verwendet werden können, um unterschiedlichen Messaufgaben gerecht zu werden.

Erfindungsgemäß ist weiter bevorzugt, wenn Mittel vorgesehen sind, um eine Betätigungskraft des Steuerelementes in einen Verfahrweg für die Antriebe umzusetzen.

Diese Maßnahme hat den Vorteil, dass der Taststift besonders feinfühlig geführt werden kann, wenn der Bediener die Verfahrwege über die Betätigungskraft und nicht über den Betätigungsweg des Steuerelementes einstellt.

Weiterhin ist in an sich bekannter Weise bevorzugt, wenn Mittel vorgesehen sind, um eine verfahrbewegung der Schlitten in eine Betätigungskraft für das Steuerelement rückzukoppeln.

Auch diese Maßnahme hat den Vorteil, dass eine besonders feinfühlige Führung erreicht werden kann, weil der Bediener bei einer Rückkopplung der Verfahrbewegung ein besseres Gefühl für die bewegten Massen hat.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine äußerst schematisierte perspektivische Ansicht eines Ausführungsbeispiels eines erfindungsgemäßen Koordinatenmessgerätes in Horizontalarm-Bauweise;
- Fig. 2: ein ebenfalls äußerst schematisiertes Blockschaltbild zur Erläuterung der Funktion des Koordinatenmessgerätes gemäß Fig. 1.

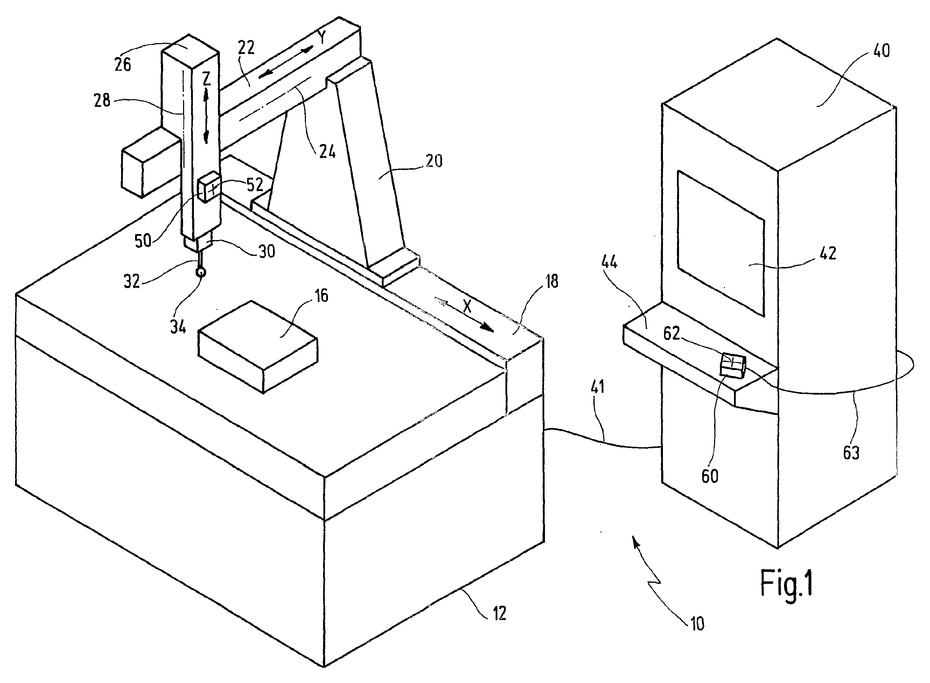

In Fig. 1 bezeichnet 10 insgesamt ein Koordinatenmessgerät in Horizontalarm-Bauweise. Es versteht sich, dass das in Fig. 1 dargestellte Koordinatenmessgerät 10 insoweit nur als Beispiel zu verstehen ist und die Erfindung dadurch in keiner Weise eingeschränkt wird. Die Erfindung kann vielmehr für Koordinatenmessgeräte aller Bauarten eingesetzt werden, also beispielsweise auch für solche in Portalbauweise, in Ständerbauweise und dgl. mehr.

Das Koordinatenmessgerät 10 weist einen Messtisch 12 auf, auf dem sich eine Messplatte 14, beispielsweise eine Messplatte aus Granit, befindet. Auf der Messplatte 14 ist ein Werkstück 16 befestigt, das vermessen werden soll.

Es wurde bereits mehrfach darauf hingewiesen, dass die vorliegende Erfindung sich in besonderem Maße für sehr große Koordinatenmessgeräte mit Achslängen von mehreren Metern eignet. Derartige Koordinatenmessgeräte werden typischerweise zum Vermessen von Kraftfahrzeugkarosserien eingesetzt. Die Koordinatenmessgeräte dieser Bauart können dabei Gewichte von über 0,5 Tonnen aufweisen, wobei die im Betrieb des Koordinatenmessgerätes bewegten Massen erheblich sind.

Beim Koordinatenmessgerät 10 gemäß Fig. 1 ist neben einer Längsseite der Messplatte 14 ein X-Antrieb 18 angedeutet. Der X-Antrieb 18 dient zum Verfahren eines X-Schlittens 20 entlang einer horizontal gerichteten X-Achse, die parallel zur Längsachse der Messplatte 14 verläuft und in der Fachsprache auch als "Grundachse" bezeichnet wird.

Der X-Schlitten 20 erstreckt sich in Vertikalrichtung nach oben und ist an seinem freien Ende mit einem Horizontalarm 22 versehen, der quer über die Messplatte 14 auskragt. Im Horizontalarm 22 befindet sich ein schematisch angedeuteter Y-Antrieb für einen Y-Schlitten 26, der üblicherweise auch als Pinole bezeichnet wird. Auf diese Weise kann der Y-Schlitten 26 entlang einer Y-Achse verfahren werden, die sich ebenfalls horizontal und parallel zur Querachse der Messplatte 14 erstreckt.

Im Y-Schlitten 26 befindet sich schließlich ein ebenfalls nur schematisch angedeuteter Z-Antrieb 28 für einen Z-Schlitten 30, üblicherweise einen Tastkopf. Damit kann der Z-Schlitten entlang einer Z-Achse verfahren werden, die sich in Vertikalrichtung und jeweils senkrecht zur X- und zur Y-Achse erstreckt.

Am unteren Ende des Z-Schlittens 30 befindet sich ein Taststift 32, an dessen unterem freien Ende wiederum eine Tastkugel 34 befestigt ist.

Zum Steuern der Abläufe im Koordinatenmessgerät 10 ist eine CNC-Steuerkonsole 40 vorgesehen, die über ein Kabel 41 mit dem Messtisch 12 verbunden ist. Die Steuerkonsole 40 enthält die üblichen Elemente, von denen in Fig. 1 ein Bildschirm 42 und ein Bedienpult 44 dargestellt sind.

Beim Ausführungsbeispiel gemäß Fig. 10 befindet sich ein Aktuator 50 auf einer seitlichen Oberfläche des Y-Schlittens 26, d.h. der Pinole. Der Aktuator 50 ist damit einerseits frei zugänglich und befindet sich andererseits in der Nähe der Tastkugel 34, d.h. in unmittelbarer Nähe des jeweiligen Messortes. Der Aktuator 50 ist mit einem Joystick 52 oder einem anderen Betätigungselement zum Erzeugen mehrachsiger Signale ausgestattet. Derartige Betätigungselemente sind unter den Bezeichnungen "Ergocommander" und "Space Mouse" und dgl. kommerziell erhältlich, worauf eingangs bereits hingewiesen wurde.

Alternativ oder zusätzlich kann das Koordinatenmessgerät 10 mit einem separat handhabbaren Panel 60 ausgerüstet sein, das in der Darstellung gemäß Fig. 1 auf dem Bedienpult 44 abgelegt ist. Das Panel 60 enthält ebenfalls ein Betätigungselement zum Erzeugen von dreidimensionalen Signalen, beispielsweise ein oder mehrerer Handräder, einen Joystick oder ein anderes der bereits erwähnten Elemente. Das Panel 60 ist über ein Kabel 63 mit der CNC-Steuerkonsole 40 verbunden.

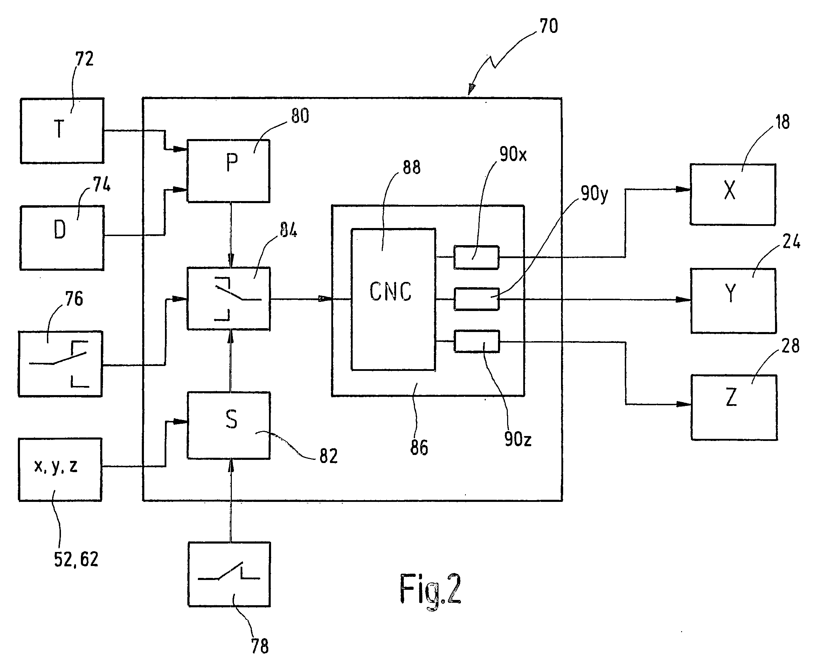

Die Wirkungsweise der Anordnung gemäß Fig. 1 soll nun an Hand des Blockschaltbildes von Fig. 2 erläutert werden:

Fig. 2 zeigt mit dem Bezugszeichen 70 als Funktionsblock eine CNC-Steuerung, die das Kernstück der CNC-Steuerkonsole 40 bildet. Die CNC-Steuerung 70 ist eingangsseitig an eine Tastatur 72 sowie einen Datenträger oder eine Datenleitung 74 angeschlossen. Weiterhin sind eingangsseitig ein Betriebsarten-Umschalter 76 sowie ein Sicherheitsschalter 78 vorgesehen. Weiterhin sind die bereits erwähnten Betätigungselemente 52 und/oder 62 des Aktuators 50 bzw. des Panels 60 ebenfalls an den Eingang der CNC-Steuerung 70 angeschlossen.

Die Tastatur 72 und der Datenträger bzw. die Datenleitung 74 sind mit einer Programmsteuerung 80 verbunden. Die Programmsteuerung 80 enthält ein übliches Messprogramm, das über die CNC-Steuerung zum Führen der Tastkugel 34 entlang vorgegebener Wege im Raum verwendet wird, um vorbestimmte Messpunkte am Werkstück 16 abzutasten.

Eine Sicherheitsschaltung 82 empfängt Signale von den Betätigungselementen 52 und/oder 62 sowie vom Sicherheitsschalter 78, wie noch erläutert werden wird. Die Programmsteuerung 80 und die Sicherheitsschaltung 82 sind an die beiden Eingänge einer Umschalteinheit 84 angeschlossen, die vom Betriebsarten-Umschalter 76 gesteuert wird. Der Ausgang der Umschalteinheit 84 ist an eine CNC-Steuereinheit 86 angeschlossen, die einen Prozessor 88 sowie drei Endstufen 90x, 90y und 90z enthält. Die Endstufen 90x, 90y und 90z sind ihrerseits an die Antriebe 18, 24 und 28 für die X-, die Y- und die Z-Achse angeschlossen.

Wenn das Koordinatenmessgerät 10 in der CNC-Betriebsart betrieben werden soll, schaltet der Bediener den Betriebsarten-Umschalter 76 in die in Fig. 2 gezeigte obere Stellung, was bewirkt, dass auch die Umschalteinheit 84 in die in Fig. 2 eingezeichnete obere Stellung geschaltet wird. Dann empfängt der Prozessor 88 von der Programmsteuerung 80 die CNC-Befehle zum Abarbeiten eines vorbestimmten Messprogrammes.

Wenn hingegen der Bediener eine manuelle Betriebsart einstellen möchte, wird der Betriebsarten-Umschalter 76 in die in Fig. 2 untere Stellung umgeschaltet, was auch einen Kontaktwechsel in der Umschalteinheit 84 bewirkt. Nun werden die in den Betätigungselementen 52 oder 62 erzeugten Steuerbefehle für die drei Achsen an den Prozessor 88 weitergeleitet, vorausgesetzt, dass die Sicherheitsschaltung 82 dies freigibt.

Die Freigabe durch die Sicherheitsschaltung 82 erfolgt nur dann, wenn durch den Sicherheitsschalter 78 ein vorbestimmter Schaltzustand erzeugt wurde.

Dieser Schaltzustand kann dadurch herbeigeführt werden, dass der Sicherheitsschalter 78 vor dem Umlegen des Betriebsarten-Umschalters 76 in die manuelle Betriebsart in vorbestimmter Weise betätigt wird, beispielsweise dreimal oder viermal nacheinander, was einen bestimmten einfachen Code darstellt.

Alternativ oder zusätzlich kann auch vorgesehen sein, den Sicherheitsschalter 78 nach dem Umlegen des Betriebsarten-Umschalters 76 zu berücksichtigen, beispielsweise indem die Sicherheitsschaltung 82 die manuelle Betriebsart nur dann freigibt bzw. freigeschaltet lässt, wenn der Sicherheitsschalter 78 auch während der manuellen Betriebsart weiter betätigt bleibt oder innerhalb bestimmter zeitlicher Mindestintervalle erneut betätigt wird.

Schließlich kann auch die Funktion der Betätigungselemente 52 oder 62 selbst als Sicherheitskriterium herangezogen werden, indem beispielsweise bei Konfigurationen mit mehreren Betätigungselementen (z.B. Handrädern) überwacht wird, ob der Bediener mit beiden Händen jeweils ein Betätigungselement ergreift, so dass von daher sichergestellt ist, dass sich beide Hände des Bedieners nicht im Verfahrbereich der bewegten Massen des Koordinatenmessgerätes 10 befinden.

Wenn auf eine dieser Weisen in der Sicherheitsschaltung 82 erkannt wurde, dass vorbestimmte Kriterien erfüllt sind und/oder weiter erfüllt bleiben, so werden die Signale der Betätigungselemente 52 und 62 über die Umschalteinheit 84 freigegeben und dem Prozessor 88 zugeleitet. Der Prozessor 88 bewirkt dann über die Endstufen 90x, 90y und 90z eine Ansteuerung der Antriebe 18, 24 und 28 ebenso wie in der CNC-Betriebsart, lediglich mit der Abweichung, dass die entsprechenden Führungssignale manuell und nicht programmiert erzeugt wurden.

Es versteht sich, dass die tatsächlichen Verhältnisse im Blockschaltbild gemäß Fig. 2 nur äußerst schematisiert wiedergegeben sind, um das Verständnis der Erfindung zu erleichtern. Selbstverständlich können z.B. die in den Blöcken 76, 78 und 84 dargestellten Schalter nicht nur als mechanische Schalter realisiert werden, sondern auch auf elektronischem Wege oder als Software.

Da Koordinatenmessgeräte der hier interessierenden Art von unterschiedlichen Bedienern benutzt werden, unter denen sich sowohl Rechtshänder wie auch Linkshänder befinden, ist in weiterer Ausbildung der Erfindung vorgesehen, die Positionierung des Aktuators 50 bzw. des Panels 60 und/oder der Betätigungselemente 52, 62 jeweils nach den Bedürfnissen von Rechtshändern einerseits und Linkshändern andererseits individuell zu gestalten. Damit kann das Koordinatenmessgerät 10 entweder wahlweise für Rechtshänder oder für Linkshänder ausgerüstet werden oder es können die erwähnten Einheiten jeweils doppelt vorgesehen sein, so dass sowohl Rechtshänder wie auch Linkshänder das Koordinatenmessgerät 10 benutzen können.

Da die Steuerung bestimmter Bewegungsabläufe bei einem Rechtshänder häufig spiegelbildlich zu denen eines Linkshänders ist, kann in diesem Falle ferner vorgesehen werden, die manuell erzeugten Signale entsprechend zu invertieren.

## Patentansprüche

1. Koordinatenmessgerät mit entlang von vorgegebenen Achsen (X, Y, Z) bewegbaren Schlitten (20, 26, 30) und mit einem Betriebsarten-Umschalter (76), wobei die Schlitten (20, 26, 30) in einer ersten Betriebsart über eine CNC-Steuereinheit (86) mit einem Prozessor (88) mittels motorischer Antriebe (18, 24, 28) und in einer zweiten Betriebsart manuell verfahrbar sind, wobei ein manuell betätigbares Steuerelement (52, 62) zum Erzeugen von Steuersignalen vorgesehen ist, und wobei das Steuerelement (52, 56) in der zweiten Betriebsart an einen Eingang der CNC-Steuereinheit (86) angeschlossen ist und die Antriebe (18, 24, 28) von dem Steuerelement (52, 56) über die CNC-Steuereinheit (86) gesteuert werden, **gekennzeichnet durch** eine Sicherheitsschaltung (82), die die zweite Betriebsart erst dann freigibt, wenn vorbestimmte Kriterien in Gestalt von Schaltzuständen erfüllt sind, und wobei die erzeugten Steuersignale dem Prozessor (88) anstelle von programmierten Steuersignalen zugeführt werden, wenn die Sicherheitsschaltung (82) dies freigibt, wobei der Prozessor (88) dann eine Ansteuerung der Antriebe (18, 24, 28) ebenso wie in der ersten Betriebsart bewirkt, lediglich mit Abweichung, dass die entsprechenden Führungssignale manuell und nicht programmiert erzeugt wurden.

2. Koordinatenmessgerät nach Anspruch 1, **dadurch gekennzeichnet, dass** der Schaltzustand durch eine vorbestimmte Betätigung eines manuell betätigbaren Schalters (78) herbeiführbar ist.

3. Koordinatenmessgerät nach Anspruch 2, **dadurch gekennzeichnet, dass** der Schalter (78) zum Herbeiführen des Schaltzustandes vor dem Umschalten der Betriebsarten in vorbestimmter Weise zu betätigen ist.

4. Koordinatenmessgerät nach Anspruch 3, **dadurch gekennzeichnet, dass** der Schalter (78) in vorbestimmter Weise mehrfach zu betätigen ist.

5. Koordinatenmessgerät nach einem oder mehreren der Ansprüche 2 bis 4, **dadurch gekennzeichnet, dass** der Schalter (78) zum Herbeiführen des Schaltzustandes nach dem Umschalten der Betriebsarten in vorbestimmter Weise zu betätigen ist.

6. Koordinatenmessgerät nach Anspruch 5, **dadurch gekennzeichnet, dass** der Schalter (78) während der Dauer der zweiten Betriebsart betätigt zu halten ist.

7. Koordinatenmessgerät nach einem oder mehreren der Ansprüche 1 bis 6, **dadurch gekennzeichnet, dass** der Schaltzustand durch eine vorbestimmte Betätigung des Steuerelementes (52, 62) herbeiführbar ist.

8. Koordinatenmessgerät nach Anspruch 7, **dadurch gekennzeichnet, dass** das Steuerelement (52, 62) als eine Mehrzahl von Betätigungselementen für verschiedene Achsen (X, Y, Z) ausgebildet ist, und dass der Schaltzustand durch eine gleichzeitige Betätigung der Betätigungselemente herbeiführbar ist.

9. Koordinatenmessgerät nach einem oder mehreren der Ansprüche 1 bis 8, **dadurch gekennzeichnet, dass** Mittel vorgesehen sind, um eine Betätigungskraft des Steuerelementes (52, 62) in einen Verfahrweg für die Antriebe (18, 24, 28) umzusetzen.

10. Koordinatenmessgerät nach einem oder mehreren der Ansprüche 1 bis 9, **dadurch gekennzeichnet, dass** Mittel vorgesehen sind, um eine Verfahrbewegung der Schlitten (20, 26, 30) in eine Betätigungskraft für das Steuerelement (52, 62) rückzukoppeln.

11. Koordinatenmessgerät nach einem oder mehreren der Ansprüche 1 bis 10, **dadurch gekennzeichnet, dass** die Antriebe (18, 24, 28) wahlweise elektrisch blockierbar sind.

12. Koordinateninessgerät nach einem oder mehreren der Ansprüche 1 bis 11, **dadurch gekennzeichnet, dass** das Steuerelement (52, 62) in einer für Rechtshänder bzw. in einer für Linkshänder optimierten ersten bzw. in einer zweiten Position angeordnet ist, und dass die von dem Steuerelement (52, 62) erzeugten Steuersignale je nach Position invertiert werden.

13. Koordinatenmessgerät nach einem oder mehreren der Ansprüche 1 bis 12, **dadurch gekennzeichnet, dass** es zum Vermessen von Karosserien von Kraftfahrzeugen ausgebildet ist.

## Claims

1. A coordinate measuring machine comprising carriages (20, 26, 30) which are movable along predefined axes (X, Y, Z), and comprising an operating mode switch (76), wherein, in a first operating mode, the carriages (20, 26, 30) are movable through a CNC control unit (86) having a processor (88) by means of motor drives (18, 24, 28), and, in a second operating mode, are movable manually-operated, wherein a manually operated control element (52, 62) is provided for generating control signals, and wherein the control element (52, 56) is connected to an input of the CNC control unit (86) in the second operating mode and the motor drives (18, 24, 28) are controlled by the control element (52, 56) through the CNC control unit (86), **characterized by** a safety circuit (82) which enables the second operating mode only, when predetermined criteria in the form of switching states are present, and wherein the generated control signals are supplied to the processor (88) instead of programmed control signals, if the safety circuit (82) enables this, wherein the processor (88) then causes an activation of the drives (18, 24, 28) as in the first operating mode, but with the difference that the corresponding guide signals are generated manually rather than by program.

2. The coordinate measuring machine according to claim 1, **characterized in that** the switching state can be initiated by a predetermined actuation of a manually operated switch (78).

3. The coordinate measuring machine according to claim 2, **characterized in that** the switch (78) for initiating the switching state has to be operated in a predetermined manner prior to switching over the operating modes.

4. The coordinate measuring machine according to claim 3, **characterized in that** the switch (78) has to be operated in a predetermined manner several times.

5. The coordinate measuring machine according to one ore more of claims 2 to 4, **characterized in that** the switch (78) for initiating the switching state has to be operated in a predetermined manner after switching over the operating modes.

6. The coordinate measuring machine according to claim 5, **characterized in that** the switch (78) has to be operated during the period of the second operating mode.

7. The coordinate measuring machine according to one ore more of claims 1 to 6, **characterized in that** the switching state can be initiated by a predetermined operation of the control element (52, 62).

8. The coordinate measuring machine according to claim 7, **characterized in that** the control element (52, 62) is designed as a plurality of actuator elements for various axes (X, Y, Z), and the switching state can be initiated by a simultaneous operation of the actuator elements.

9. The coordinate measuring machine according to one or more of claims 1 to 8, **characterized by** means for converting an actuating force on the control element (52, 62) into an amount of movement of the drives (18, 24, 28).

10. The coordinate measuring machine according to one ore more of claims 1 to 9, **characterized by** means for feeding back an amount of movement of the carriages (20, 26, 30) into an operating force for the control element (52, 62).

11. The coordinate measuring machine according to one ore more of claims 1 to 10, **characterized in that** the drives (18, 24, 28) can be electrically locked, if desired.

12. The coordinate measuring machine according to one ore more of claims 1 to 11, **characterized in that** the control element (52, 62) is arranged in a first or in a second position optimized for a right-hander or a left-hander, and the control signals generated by the control element (52, 62) are inverted depending on the position.

13. The coordinate measuring machine according to one ore more of claims 1 to 12, **characterized in that** it is configured for measuring bodies of automotive vehicles.

## Revendications

1. Appareil de mesure de coordonnées comportant des chariots (20, 26, 30) mobiles suivant des axes (X, Y, Z) prédéterminé et comportant un inverseur de modes de fonctionnement (76), sachant que, dans un premier mode de fonctionnement, les chariots (20, 26, 30) peuvent être déplacés par des systèmes d'entraînement (18, 24, 28) à moteur par l'intermédiaire d'une unité de commande CNC (86) avec un processeur (88) et, dans un deuxième mode de fonctionnement, ils peuvent être déplacés manuellement, un élément de commande (52, 62) actionnable manuellement étant prévu pour générer des signaux de commande, et l'élément de commande (52, 56) étant raccordé dans le deuxième mode de fonctionnement à une entrée de l'unité de commande CNC (86) et les systèmes d'entraînement (18, 24, 28) étant commandés par l'élément de commande (52, 56) par l'intermédiaire de l'unité de commande CNC (86), **caractérisé par** un composant de sécurité (82) qui libère le deuxième mode de fonctionnement uniquement lorsque des critères prédéfinis sous forme d'états de commutation sont remplis, et les signaux de commande générés étant acheminés vers le processeur (88) en lieu et place de signaux de commande programmés, lorsque le composant de sécurité (82) le permet, le processeur (88) induisant alors une activation des systèmes d'entraînement (18, 24, 28) tout comme dans le premier mode de fonctionnement, uniquement avec la différence que les signaux de guidage correspondants ont été générés manuellement et non pas sous forme programmée.

2. Appareil de mesure de coordonnées selon la revendication 1, **caractérisé en ce que** l'état de commutation peut être induit par un actionnement prédéterminé d'un commutateur (78) actionnable manuellement.

3. Appareil de mesure de coordonnées selon la revendication 2, **caractérisé en ce que** le commutateur (78) pour induire l'état de commutation doit être actionné d'une manière prédéterminée avant la commutation d'un mode de fonctionnement à l'autre.

4. Appareil de mesure de coordonnées selon la revendication 3, **caractérisé en ce que** le commutateur (78) doit être actionné plusieurs fois de manière prédéterminée.

5. Appareil de mesure de coordonnées selon une ou plusieurs des revendications 2 à 4, **caractérisé en ce que** le commutateur (78) pour induire l'état de commutation doit être actionné d'une manière prédéterminée après la commutation d'un mode de fonctionnement à l'autre.

6. Appareil de mesure de coordonnées selon la revendication 5, **caractérisé en ce que** le commutateur (78) doit être maintenu à l'état actionné pendant la durée du deuxième mode de fonctionnement.

7. Appareil de mesure de coordonnées selon une ou plusieurs des revendications 1 à 6, **caractérisé en ce que** l'état de commutation peut être induit par un actionnement prédéterminé de l'élément de commande (52, 62).

8. Appareil de mesure de coordonnées selon la revendication 7, **caractérisé en ce que** l'élément de commande (52, 62) est réalisé sous la forme d'une pluralité d'éléments d'actionnement pour différents axes (X, Y, Z), et **en ce que** l'état de commutation peut être induit par un actionnement simultané des éléments d'actionnement.

9. Appareil de mesure de coordonnées selon une ou plusieurs des revendications 1 à 8, **caractérisé en ce qu'**il est prévu des moyens pour transformer une force d'actionnement de l'élément de commande (52, 62) en un mouvement de déplacement des systèmes d'entraînement (18, 24, 28).

10. Appareil de mesure de coordonnées selon une ou plusieurs des revendications 1 à 9, **caractérisé en ce qu'**il est prévu des moyens pour retransformer un mouvement de déplacement des chariots (20, 26, 30) en une force d'actionnement de l'élément de commande (52, 62).

11. Appareil de mesure de coordonnées selon une ou plusieurs des revendications 1 à 10, **caractérisé en ce que** les systèmes d'entraînement (18, 24, 28) peuvent être bloqués au choix électriquement.

12. Appareil de mesure de coordonnées selon une ou plusieurs des revendications 1 à 11, **caractérisé en ce que** de l'élément de commande (52, 62) est agencé dans une première position optimisée pour des droitiers ou dans une deuxième position optimisée pour des gauchers, et **en ce que** les signaux de commande générés par l'élément de commande (52, 62) sont inversés en fonction de la position.

13. Appareil de mesure de coordonnées selon une ou plusieurs des revendications 1 à 12, **caractérisé en ce qu'**il est réalisé pour mesurer les carrosseries des véhicules automobiles.
